# EUROPÄISCHE PATENTSCHRIFT

(11) **EP 0 937 929 B1**
(45) Veröffentlichungstag und Bekanntmachung des Hinweises auf die Patenterteilung: **21.05.2003**
(21) Anmeldenummer: 99102383.9
(22) Anmeldetag: 08.02.1999
(51) Int. Cl.: F16L 3/04, F16L 3/13

(54) **Fixiervorrichtung für Leitungen in Wandschlitzen**
Fixing device for fixing pipes in a groove in a wall
Dispositif pour la fixation de lignes dans le fond d'une rainure réalisée dans un mur

(30) Priorität: 21.02.1998 DE 29803142 U
(43) Veröffentlichungstag der Anmeldung: 25.08.1999
(73) Patentinhaber: Siebert, Stefan, 79111 Freiburg (DE)
(72) Erfinder: Siebert, Stefan, 79111 Freiburg (DE)
(74) Vertreter: Goy, Wolfgang, Dipl.-Phys.

(56) Entgegenhaltungen:
- EP-A- 0 433 621
- EP-A- 0 758 065
- DE-B- 1 077 284
- FR-A- 2 023 593
- GB-A- 2 127 236

## Beschreibung

Die Erfindung betrifft eine Vorrichtung zum provisorischen Fixieren von Leitungen, Kabeln, Rohren, Schläuchen oder dgl. innerhalb von in Wänden, Decken oder Böden verlaufenden Schlitzen oder Nuten.

Die erfindungsgemäße Haltevorrichtung ist nicht nur zum provisorischen Fixieren von Leitungen, Kabeln, Rohren oder Schläuchen geeignet, sondern vielmehr allgemein für vergleichbare längliche Installationselemente, wie sie im Gebäudebau Verwendung finden und innerhalb von Wänden, Decken, Böden etc. verlaufen. Das Dokument FR 2 023 593 zeigt eine Vorrichtung zum provisorischen Eiseienen von Leitungen etc. innerhalb von Wandschlitzen oder- nuten.

Die erfindungsgemäße Fixiervorrichtung ist dabei nicht für ein Bündel von nebeneinanderliegenden Leitungen etc. gedacht. Hierfür kennt man andere Befestigungseinrichtungen beispielsweise in Kabelschächten. Die erfindungsgemäße Fixiervorrichtung ist für Leitungen etc. gedacht, welche allenfalls hintereinander in einem Wandschlitz angeordnet werden können, nicht jedoch nebeneinander.

Bislang stellt das provisorische Fixieren von Leitungen etc. innerhalb von Wandschlitzen oder -nuten ein großes Problem dar. Die zu verlegenden Leitungen etc. werden beispielsweise mit Hilfe von Nägeln in den entsprechenden Schlitzen fixiert. Alternativ werden die Leitungen punktuell eingegipst. Das Einbringen von Nägeln, Schrauben, Stiften etc. ist oftmals problematisch. Oft werden auch die Leitungen mit den Nägeln durchstochen. Das punktuelle Eingipsen ist dann problematisch, wenn auf der Baustelle kein Wasser vorhanden ist, um die Gipsmasse anzurühren. Das Fehlen von Wasser ist jedoch auf den meisten Baustellen der Fall.

Davon ausgehend liegt der Erfindung die **Aufgabe** zugrunde, eine Verbesserung zum provisorischen Fixieren von Leitungen, Kabeln, Rohren, Schläuchen oder dgl. innerhalb von in Wänden, Decken oder Böden verlaufenden Schlitzen oder Nuten zu schaffen.

Als technische **Lösung** wird mit der Erfindung eine auf der Leitung etc. befestigbare Vorrichtung nach Anspruch 1 vorgeschlagen.

Die Grundidee der erfindungsgemäßen Fixiervorrichtung besteht darin, auf die bisherigen Hilfsmittel Nagel und punktuelles Eingipsen zu verzichten, sondern stattdessen ein Fixierelement auf der entsprechenden Leitung zu befestigen, welches dann zusammen mit der Leitung in dem Schlitz oder der Nut einklemmbar ist. Der große Vorteil liegt darin, daß die Leitungen etc. ohne Werkzeugeinsatz innerhalb von in die Wände eingeschlagenen oder eingefrästen Nuten oder Schlitze fixiert werden können, bevor diese wieder verschlossen werden. Durch das Verschließen durch Vergipsen werden dann die Leitungen endgültig innerhalb der Wand fixiert. Durch die erfindungsgemäße werkzeuglose Montage werden keine Nägel, Stifte oder Schrauben sowie entsprechendes Montagewerkzeug benötigt. Das erfindungsgemäße Fixierelement wird einfach auf der Leitung befestigt und komplett in den Schlitz bzw. die Wandöffnung gedrückt.

Die erfindungsgemäße Vorrichtung besteht aus einer im wesentlichen C-förmige Klemme welche auf die Leitung etc. aufsteckbar ist. Die Grundidee der erfindungsgemäßen Klemme liegt darin, daß sie auf die Leitung auf einfache Weise aufgeklipst werden kann, um so eine stabile Verbindung zwischen dem Fixierelement und der Leitung herzustellen. Voraussetzung hierfür ist, daß die C-förmige Klemme flexibel ist und mit ihren Schenkeln die Leitung teilweise umgreift, so daß der Umgreifwinkel der Klemme mehr als 180° beträgt. Durch eine entsprechende Auswahl des Klemmenmaterials, insbesondere Kunststoffmaterial, kann erreicht werden, daß sich die Klemme relativ leicht aufklipsen läßt, daß aber der Halt groß genug ist, die Leitung innerhalb der Öffnung der Klemme zu fixieren.

Die klemme weist im Bereich der beiden Schenkel jeweils nach außen gerichtete Flügel auf. Diese beiden Flügel sind für die Klemmkraft verantwortlich, welche die Klemme innerhalb des Schlitzes ausübt und mit der die Klemme zusammen mit der Leitung innerhalb des Schlitzes gehalten wird. Diese beiden Flügel verspannen somit den eigentlichen Grundkörper der C-förmigen Klemme innerhalb des Schlitzes zwischen den einander benachbarten Schlitzwänden. Da diese Flügel die Haupthaltekraft der Klemme definieren, sind die Flügel entsprechend groß zu dimensionieren, um im geklemmten Zustand den notwendigen Gegendruck auf die Wand zu erzeugen.

Die Flügel sind bezüglich der Klemmenöffnung nach hinten gerichtet. Diese Ausrichtung der Flügel hat den Vorteil, daß die Klemme mit der Klemmenöffnung - und damit der Leitung - voran problemlos in den Wandschlitz hineingedrückt werden kann und somit mit ihren freien Enden an den Innenwänden des Schlitzes zur Anlage kommen. Selbstverständlich darf die Länge der Klemme von der vorderen Öffnung bis hin zum hinteren Ende der Flügel nicht größer sein als die Schlitztiefe. Außerdem haben die nach hinten gerichteten Flügel den Vorteil, daß durch entsprechendes Zusammendrücken die Schenkel der Klemme aufspreizen und somit das Festklemmen der Klemme auf der Leitung vereinfacht ist.

Die Flügel weisen an ihren freien Enden jeweils eine Verstärkung auf, um die notwendige innere Spannung der Flügel für den erforderlichen Gegendruck auf die Wand zu schaffen.

In Steckrichtung gesehen vor den Flügeln befinden sich Widerhaken. Diese Widerhaken können von der Haltekraft gesehen geringer dimensioniert sein als die Flügel. Diese Widerhaken üben - ebenso wie die Flügel - in unterschiedlich geformten Wandungen eine gewisse Anpassung aus. So können sich die Flügel sowie die Widerhaken beispielsweise bei Ziegelsteinen hinter die baulich bedingten Ausparungen der Steine legen und wie ein Widerhaken wirken.

Die Außenseite der Klemme und/oder die Außenseite des jeweiligen Flügels weist im Bereich hinter dem Widerhaken eine Ausnehmung auf. Dies erweist sich dann von Vorteil, wenn der Schlitz eine relativ geringe Höhe aufweist, so daß der Widerhaken nicht störend auf der Außenseite der Klemme aufliegt, sondern vielmehr in der Ausnehmung zu liegen kommt.

Da die Leitungen, Kabel, Rohre, Schläuche etc. in der Regel einen runden Querschnitt aufweisen, schlägt eine Weiterbildung der erfindungsgemäßen Klemme vor, daß diese eine im wesentlichen runde Innenkontur aufweist.

Ein Ausführungsbeispiel einer erfindungsgemäßen Fixiervorrichtung wird nachfolgend anhand der Zeichnungen beschrieben. In diesen zeigt:

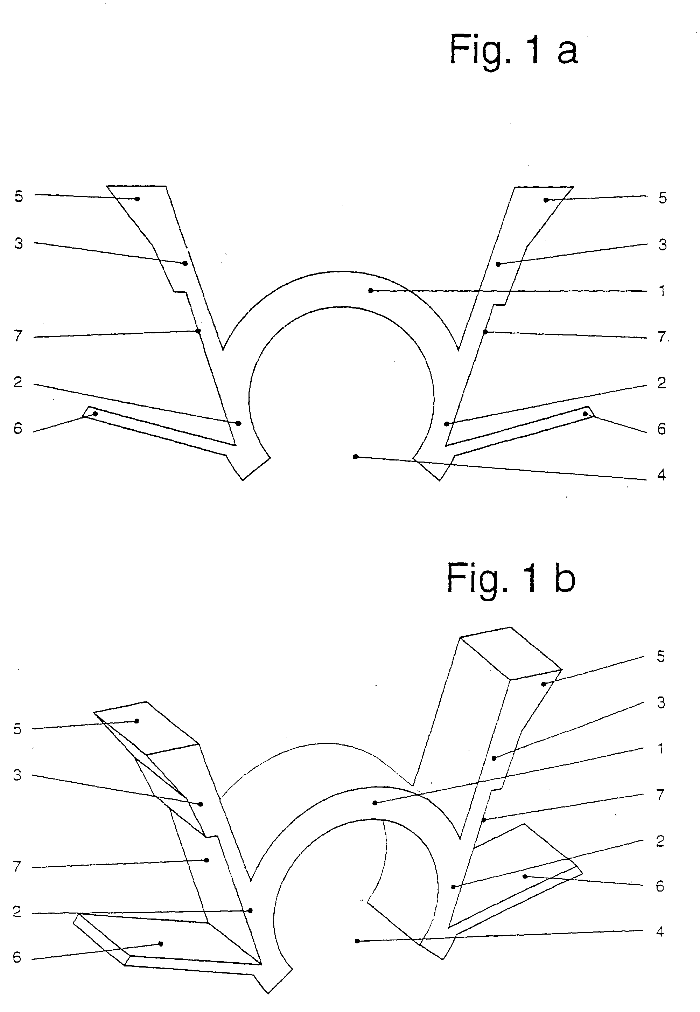

- Fig. 1 a und b: eine Draufsicht sowie eine perspektivische Ansicht des Klemmelements;
- Fig. 2 a bis c: der Montagevorgang des Klemmelement in einem Mauerschlitz;
- Fig. 3 a: eine bezüglich der Darstellung in Fig. 2 b modifizierte Anordnung des Klemmelements in einer Wand, deren Innenseite des Schlitzes Aushöhlungen aufweist.

Die Fixiervorrichtung als solche weist eine Klemme 1 mit einer im wesentlichen C-förmigen Querschnittsform auf. Der Klemmenkörper ist dabei dem Grunde nach ein geschlitzter Zylindermantel mit einem Mantelwinkel von mehr als 180°, etwa 260°. Der Körper besteht aus einem flexiblen Kunststoffmaterial.

An den beiden einander gegenüberliegenden Schenkeln 2 der C-förmigen Klemme 1 sind Flügel 3 angeformt. Von der Klemmenöffnung 4 aus ragen die beiden Flügel 3 nach hinten sowie schräg nach außen, so daß der Abstand zwischen den beiden freien Enden der Flügel 3 größer ist als der Durchmesser des Klemmenkörpers. An ihren freien Enden weisen die Flügel 3 jeweils Verstärkungen 5 auf. Die nach außen gerichteten freien Enden der Flügel 3 laufen dabei unter einem spitzen Winkel zu.

Im Bereich der Klemmenöffnung 4 sind an der Klemme 1 weiterhin Widerhaken 6 angeformt, welche ebenfalls nach hinten sowie nach außen gerichtet sind. Von der Materialstärke her sind sie geringer dimensioniert als die Flügel 3. Ebenso wie die Flügel 3 sind auch die Widerhaken 6 flexibel. Hinter den Widerhaken 6 weist die Klemme 1 bzw. der Flügel 3 außenseitig eine Ausnehmung 7 auf, in welcher der entsprechende Widerhaken 6 durch Nachinnenschwenken zum Liegen kommen kann.

Die Funktionsweise der Fixiervorrichtung ist wie folgt:

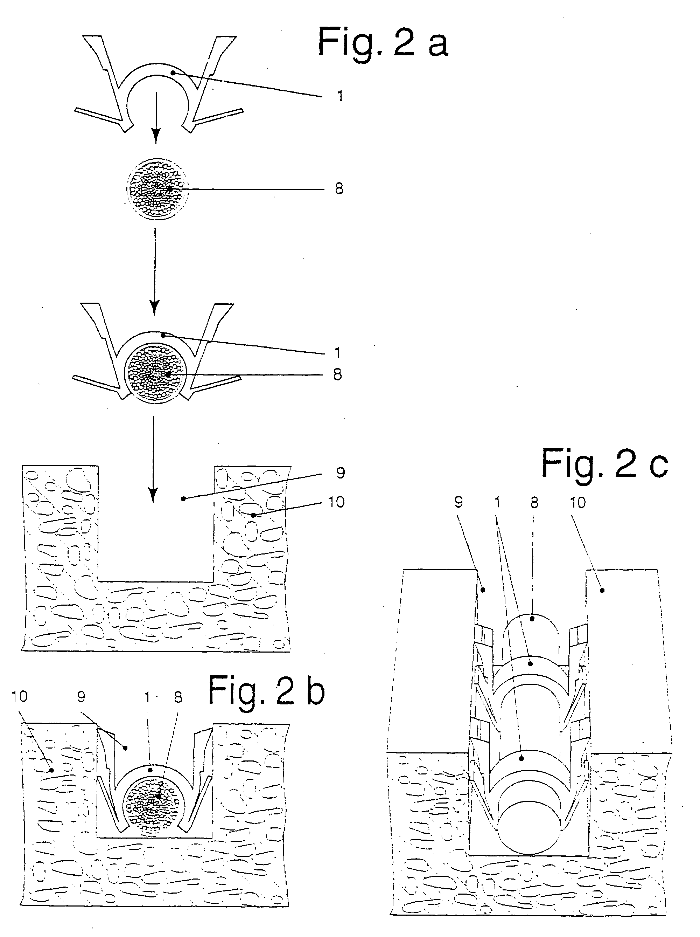

Der Einsetzvorgang wird anhand Fig. 2 a beschrieben. Zunächst wird die Klemme 1 auf eine Leitung 8 aufgeklipst. Zur Unterstützung können die beiden Flügel 3 nach innen gedrückt werden, so daß sich die Klemmenöffnung 4 der Schenkel 2 der Klemme 1 kurzzeitig aufweitet.

Diese so aus Klemme 1 und Leitung 8 geschaffene Einheit wird anschließend in einen Schlitz 9 in einer Wand 10 gedrückt, wie dies in Fig. 2 b erkennbar ist. Dabei kommen die Flügel 3 an den Innenseitenwänden des Schlitzes 9 zur Anlage und erzeugen den notwendigen Gegendruck auf die Wand 10. Dadurch ist die Klemme 1 und somit die Leitung 8 sicher in dem Schlitz 9 der Wand 10 fixiert. Außerdem kommen die Widerhaken 6 in dem Schlitz 9 zur Anlage und erzeugen somit eine zusätzliche Klemmkraft. Wie in Fig. 2 c erkennbar ist, ist die Leitung 8 in bestimmten Abständen mit derartigen Klemmen 1 bestückt.

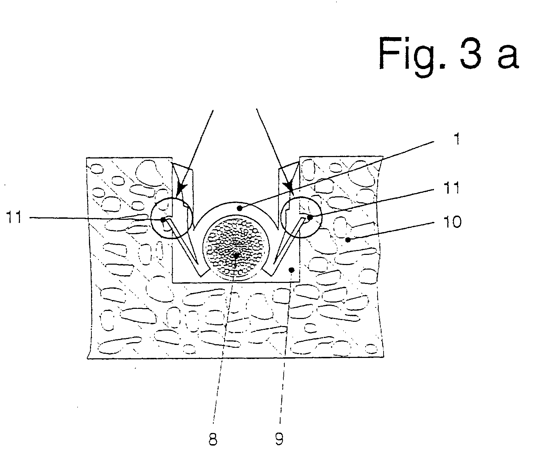

Bei der Darstellung in Fig. 3 handelt es sich um die gleiche Klemme 1 wie zuvor beschrieben und dargestellt. Der einzige Unterschied in der Darstellung zu Fig. 2 b besteht darin, daß der Schlitz 9 der Wand 10 Aushöhlungen 11 aufweist, in denen die freien Enden der Widerhaken 6 zu liegen kommen und damit die Funktion eines Widerhakens erfüllen.

In dem dargestellten Ausführungsbeispiel wird zunächst die Klemme 1 auf der Leitung 8 befestigt und anschließend die Einheit aus Leitung 8 und Klemme 1 in den Schlitz 9 einzusetzen. Alternativ ist es auch denkbar, zunächst die Leitung 8 ohne die Klemme 1 in den Schlitz 9 hineinzulegen und anschließend die Klemme 1 in den Schlitz 9 hineinzudrücken, wobei die Klemme 1 gleichzeitig auf die in dem Schlitz 9 befindliche Leitung 8 aufklipst. Zu diesem Zweck ist die Klemme 1 im Bereich der Klemmenöffnung 4 entsprechend konusfömig abgeschrägt.

Der Vorteil der erfindungsgemäßen Fixiervorrichtung mit der C-förmigen Klemme 1 mit ihren Flügeln 3 und Widerhaken 6 besteht darin, daß die Leitung 8 provisorisch in einem Schlitz 9 einer Wand 10 werkzeuglos fixiert werden kann, so daß anschließend der Schlitz 9 durch Zugipsen komplett wieder verschlossen werden kann.

### Bezugszeichenliste

- 1: Klemme
- 2: Schenkel
- 3: Flügel
- 4: Klemmenöffnung
- 5: Verstärkung
- 6: Widerhaken
- 7: Ausnehmung
- 8: Leitung
- 9: Schlitz
- 10: Wand
- 11: Aushöhlung

## Patentansprüche

1. Vorrichtung zum provisorischen Fixieren von Leitungen (8), Kabeln, Rohren, Schläuchen oder dgl. innerhalb von in Wänden (10), Decken oder Böden verlaufenden Schlitzen (9) oder Nuten,
mit einer im wesentlichen C-förmigen, flexiblen Klemme (1) mit im Bereich von zwei Schenheln (2) jeweils nach außen sowie bezüglich der Klemmenöffnung (4) nach hinten gerichteten Flügeln (3),
wobei die Klemme (1) innerhalb des Schlitzes (9) etc. zusammen mit der Leitung (8) etc. festklemmbar ist,
**dadurch gekennzeichnet,**
**daß** der Umgreifwinkel der Schenkel (2) der C-förmigen Klemme (1) mehr als 180° beträgt, so daß die C-förmige Klemme (1) vor dem Einführen in den Schlitz (9) etc. auf die Leitung (8) etc. aufgesteckt ist und dabei mit ihren Schenkeln (2) die Leitung (8) etc. umgreift,
**daß** die Flügel (3) an ihren freien Enden jeweils eine Verstärkung (5) aufweisen,
**daß** sich in Steckrichtung gesehen vor den Flügeln (3) Widerhaken (6) befinden, welche bezüglich der Haltekraft geringer dimensioniert sind als die Flügel (3), und
**daß** die Außenseite der Klemme (1) und/oder die Außenseite des jeweiligen Flügels (3) im Bereich hinter dem Widerhaken (6) eine Ausnehmung (7) aufweist.

2. Vorrichtung nach dem vorhergehenden Anspruch,
**dadurch gekennzeichnet,**
**daß** die Innenkontur der Klemme (1) im wesentlichen rund ist.

## Claims

1. Device for the provisional fixing of lines (8), cables, pipes, hoses or the like within slots (9) or grooves running in walls (10), ceilings or floors, with a substantially C-shaped flexible clamp (1) with, in the area of two legs (2), wings (3) each pointing outwards and to the rear in relation to the clamp opening (4), where the clamp (1) can be clamped within the slot (9) etc. together with the line (8) etc., **characterised in that** the enclosure angle of the legs (2) of the C-shaped clamp (1) is more than 180° so that before introduction into the slot (9) etc. the C-shaped clamp (1) is placed on the line (8) etc. and with its legs (2) surrounds the line (8) etc., **in that** the wings (3) at their free ends each have a reinforcement (5), that viewed in the connection direction in front of the wings (3) are back hooks (6) which are dimensioned to have a smaller retaining force than the wing (3), and **in that** the outside of the clamp (1) and/or the outside of the wing (3) has a recess (7) in the area behind the back hook (6).

2. Device according to the previous claim, **characterised in that** the inner contour of the clamp (1) is substantially round.

## Revendications

1. Dispositif pour la fixation provisoire de lignes (8), câbles, tubes, tuyaux ou similaires dans des rainures ou des fentes (9) réalisées dans des murs (10), plafonds ou sols, avec une pince (1) flexible essentiellement en forme de C, dotée dans la partie de deux branches (2) d'ailettes (3) orientées respectivement vers l'extérieur ainsi que vers l'arrière par rapport à l'ouverture (4) de la pince, la pince (1) pouvant être bloquée dans la fente (9) etc. avec la ligne (8) etc., **caractérisé en ce que** l'angle d'enveloppement des branches (2) de la pince en forme de C (1) est supérieur à 180°, de sorte que la pince (1) en forme de C est placée sur la ligne (8) etc. avant l'insertion dans la fente (9) etc. et qu'elle entoure la ligne (8) etc. avec ses branches (2), **en ce que** les ailettes (3) présentent respectivement un renforcement (5) sur leurs extrémités libres, **en ce que** des ardillons (6) sont prévus devant les ailettes (3), vu dans le sens d'insertion, lesquels ardillons sont de dimension inférieure aux ailettes (3) en ce qui concerne la force de rétention, et **en ce que** le côté extérieur de la pince (1) et/ou le côté extérieur de l'ailette respective (3) présente un évidement (7) dans la partie située derrière l'ardillon (7).

2. Dispositif selon la revendication précédente, **caractérisé en ce que** le contour intérieur de la pince (1) est essentiellement rond.
